# EUROPÄISCHE PATENTANMELDUNG

(11) **EP 1 312 768 A1**
(43) Veröffentlichungstag der Anmeldung: **21.05.2003**
(21) Anmeldenummer: 01127329.9
(22) Anmeldetag: 16.11.2001
(51) Int. Cl.: F01D 25/16, F01D 3/04

(54) **Turbine mit elektromagnetischem axialen Drucklager**

(71) Anmelder: SIEMENS AKTIENGESELLSCHAFT, 80333 München (DE)
(72) Erfinder: Dirauf, Peter, 91056 Erlangen (DE); Kiefer, Wolfgang, 91056 Erlangen (DE); Leuze, Andreas, 91090 Effeltrich (DE); Madl, Peter, 91301 Forchheim (DE)

(57) **Zusammenfassung**

Es wird eine Turbine, insbesondere eine Dampfturbine mit Reaktionsbeschaufelung präsentiert, die mit einem Trommel (4) und Beschaufelung (5) aufweisenden Läufer (3), einem Druckausgleichskolben (8) und einer den Läufer (3) und den Druckausgleichskolben (8) tragenden Welle (6) sowie wenigstens einem axial wirkende Wellenkräfte aufnehmenden Drucklager versehen ist. Um eine Turbine bereitzustellen, die bei einer gleichzeitig wirkungsvollen Kompensation der durch den Läufer (3) bewirkten Axialkräfte ein gegenüber herkömmlichen Turbinen verbesserten Wirkungsgrad aufweist wird vorgeschlagen, dass das Drucklager als elektromagnetisches Axiallager ausgeführt ist.

## Beschreibung

Die Erfindung betrifft eine Turbine, insbesondere eine Dampfturbine mit Reaktionsbeschaufelung, mit einem Trommel und Beschaufelung aufweisenden Läufer, einem Druckausgleichskolben und einer den Läufer und den Druckausgleichskolben tragenden Welle sowie wenigstens einem axial wirkende Wellenkräfte aufnehmenden Drucklager.

Turbinen im allgemeinen sowie Dampfturbinen im speziellen sind aus dem Stand der Technik an sich bekannt. Hierbei handelt es sich um Wärmekraftmaschinen, in denen im Falle der Dampfturbinen die Druckenergie von hochgespanntem Heißdampf bei Durchströmen von mit Beschaufelung versehenen Trommeln oder Rädern in mechanischer Arbeit umgewandelt wird.

Zu unterscheiden sind Aktionsdampfturbinen und Reaktionsturbinen. Bei Aktionsdampfturbinen, auch Gleichdruckturbinen genannt, wird die Druckenergie nur in Leiteinrichtung des Dampfes in kinetische Energie umgesetzt. Bezogen auf die Strömungsrichtung des Dampfes bleibt der Druck vor und hinter der Beschaufelung gleich, was konstante Strömungsgeschwindigkeiten relativ zur Beschaufelung und damit konstanten Querschnitt im Beschaufelungskanal bedeutet. Bei Reaktionsturbinen, auch Überdruckturbinen genannt, kommt es hingegen zum Druckabfall sowohl an der Leit- als auch an der Laufbeschaufelung. Hierbei findet eine Expansion des Dampfes auch zwischen den einzelnen Schaufeln der Laufbeschaufelung statt, infolgedessen der Druck, bezogen auf die Strömungsrichtung des Dampfes, vor den Schaufeln höher ist als hinter den Schaufeln. Hierdurch bedingt stellt sich ein in Richtung der Dampfströmung auf die Welle einwirkender Axialschub ein, der durch den Druckunterschied an der jeweiligen Schaufel und die freie Schaufellänge bestimmt ist und bei entsprechender Schaufelanzahl beträchtliche Werte annehmen kann.

Auch in Gleichlaufturbinen treten Axialschübe aus, doch sind diese im Vergleich zu den Axialschüben in Überdruckturbinen von nur geringem Ausmaß, denn wird in den Laufschaufeln von Gleichdruckturbinen keine Druckgefälle verarbeitet.

Moderne Überdruckdampfturbinen arbeiten bei einer hohen Drehzahl des Läufers, deren Erreichen durch einen entsprechend hohen Druck im Dampf sichergestellt ist. Hiermit einhergehend stellen sich hohe Druckunterschiede an der Beschaufelung ein, was wiederum zu einem hohen Axialschub am Läufer führt. Die hierdurch bedingte und axial auf die Welle einwirkende Kraft muss durch ein entsprechend ausgelegtes Drucklager aufgenommen werden. Der technischen sowie vor allem wirtschaftlich sinnvollen Realisierung eines entsprechend ausgelegten Drucklagers sind jedoch in den Grenzen gesetzt, weswegen bei den aus dem Stand der Technik bekannten Überdruckturbinen für eine Kompensation des mit zum Teil erheblichen kräftewirkenden Läufer-Axialschubes und der damit verbundenen Entlastung des Drucklagers die Verwendung eines Druckausgleichskolbens vorgesehen ist.

Der Druckausgleichskolben ist zusammen mit dem Läufer auf der gemeinsamen Welle angeordnet, wobei durch den Druckausgleichskolben ein Axialschub bewirkt wird, der entgegen der Dampfströmung und somit entgegen den durch den Läufer bewirkten Axialschub wirkt und diesen kompensiert. Erreicht wird dies dadurch, dass in etwa gleichgroße Druckverhältnisse in Strömungsrichtung des Dampfes vor und hinter der Überdruckbeschaufelung einerseits und entgegen der Strömungsrichtung des Dampfes vor und hinter dem Ausgleichskolben andererseits eingestellt werden. Im Ergebnis ergibt sich dann auch bei Druckschwankungen im Heißdampf, z.B. bei Teillastbetrieb oder beim Anfahren der Turbine, ein am Ausgleichskolben wirkender Axialschub, der dem am Läufer wirkenden Axialschub mit gleicher Größe entgegenwirkt. Vom Drucklager sind dann nur noch geringe Kräfte aufzunehmen, die sich beispielsweise infolge von kleineren Druckschwankungen einstellen können.

Von untergeordneter Bedeutung, bei der Auslegung der Turbine aber gleichwohl nicht zu vernachlässigen, ist der durch die Wellenstopfenbuchsen verursachte Schub. Er ist zwar gegenüber den vorgenannten Axialschüben des Läufers bzw. des Ausgleichskolbens klein, allerdings ist er für die Auslegung sowohl des Durchmessers des Ausgleichskolbens als auch für die Auslegung des Drucklagers mit zu berücksichtigen. Die Heißdampf-Stopfenbüchse erzeugt einen Schub entgegen der Dampfströmung, mithin in Richtung des Ausgleichskolbens. Der Schub an der Nass-Dampf-Stopfenbüchse ist bei Kondensationsturbinen gleichfalls entgegen der Dampfströmung gerichtet. Bei Gegendruckturbinen umgekehrt.

Die Wirtschaftlichkeit einer Kraftwerksanlage bzw. die Wirtschaftlichkeit einer Turbine richtet sich in entscheidendem Maße am Wirkungsgrad der Anlage aus. Der Wirkungsgrad einer Turbine wird durch die Strömungen dem Beschaufelungskanal einerseits und durch die Leckverluste am Ausgleichskolben und an den Stopfbuchsen andererseits bestimmt. Von Nachteil bei dem Vorbeschriebenen und aus dem Stand der Technik bekannten Aufbau von Überdruckdampfturbinen ist der durch den notwendiger Weise vorzusehenden Ausgleichskolben bedingte Leckdampfstrom, der zur Erzeugung eines gegen den Axialschub des Läufers wirkenden Gegenschubs dient und keine Arbeit in der Turbine verrichten kann, wodurch der Wirkungsgrad der Turbine sinkt. Hierbei ergibt sich die erforderliche Wirkfläche, d.h. der notwendiger Weise vorzusehende Durchmesser, des Ausgleichskolbens aus den vorherrschenden Druckverhältnissen in der Beschaufelung. Geringe Restkräfte können vom Axiallager aufgenommen werden, wobei eine Auslegung des Lagers unter Berücksichtigung auch des durch die Stopfenbuchsen bedingten Schubes zu erfolgen hat.

Vom Vorgenannten ausgehend liegt der Erfindung unter Vermeidung der beschriebenen Nachteile die Aufgabe zugrunde, eine Turbine bereitzustellen, die bei einer gleichzeitig wirkungsvollen Kompensation der durch den Läufer bewirkten Axialkräfte einen gegenüber herkömmlichen Turbinen verbesserten Wirkungsgrad aufweist.

Zur Lösung dieser Aufgabe wird mit der Erfindung eine Turbine vorgeschlagen, die **dadurch gekennzeichnet** ist, dass das Drucklager ein elektromagnetisches Axiallager ist.

Die erfindungsgemäße Verwendung eines elektromagnetischen Axiallagers erlaubt die Aufnahme auch großer Kräfte. Hierdurch wird erreicht, dass eine Kraftkompensation durch den Ausgleichskolben in nur noch verringertem Ausmass erforderlich ist, so dass der Ausgleichskolben hinsichtlich seiner Wirkfläche, d.h. hinsichtlich seines Durchmessers, reduziert ausgebildet werden kann. Hierdurch bedingt wird die Leckdampfmenge am Ausgleichskolben deutlich verringert, was zu einer Verbesserung des Wirkungsgrades der Turbine führt.

Anders als bei den aus dem Stand der Technik bekannten Turbinen wird der resultierende Schub, d.h. die auf die Welle einwirkende Axialkraft, nicht vorwiegend allein durch den Ausgleichskolben, sondern durch den Einsatz eines elektromagnetischen Axiallagers eliminiert. Mit der Erfindung wird also ein im Vergleich zu dem aus dem Stand der Technik vorbekannten Turbinen technisch neuer Weg beschritten. Anstatt das Axiallager möglichst nur mit geringen Restkräften zu belasten und eine Kompensation der durch den Läufer bedingten Axialkräfte mittels eines entsprechend ausgebildeten Ausgleichskolbens vorzusehen, wird mit der Erfindung ein hierzu gegenteiliges Vorgehen vorgeschlagen. So ist mit der erfindungsgemäßen Lösung nicht der Ausgleichskolben, sondern das Axiallager diejenige Komponente der Turbine, die zur hauptsächlichen Kompensation der auftretenden Axialkräfte dient. Hierdurch kann, wie bereits dargelegt, der Durchmesser des Ausgleichskolbens und damit der Leckdampfstrom reduziert werden. In vorteilhafterweise ergibt sich hierdurch ein verbesserter Wirkungskreis der Turbine.

Die Verwendung eines elektromagnetischen Axiallagers bietet zudem den Vorteil der berührungsfreien Lagerung. Die für eine Lagerung benötigten Lagerkräfte werden durch ein geeignetes magnetisches Feld erzeugt, das zwischen der feststehenden Einheit und der zu lagernden Einheit aufgebaut wird. Die zu lagernde Einheit schwebt hierbei berührungsfrei im magnetischen Feld, womit das elektromagnetische Axiallager verschleißfrei ist und keinerlei Schmiermittel benötigt, was auch unter umweltpolitischen Gesichtspunkten von Vorteil ist.

Das benötigte Magnetfeld wird mit Hilfe von Elektromagneten erzeugt. Durch die Variation des Stromes in den Spulen der Elektromagnete kann das Magnetfeld des elektromagnetischen Axiallagers und damit die wirkenden Lagerkräfte verändert werden. Somit ist es möglich die Eigenschaften des Lagers, wie z.B. hinsichtlich Steifigkeit und/oder Dämpfung, auch während eines Betriebes des Lagers wahlweise einzustellen.

Neben einer Verbesserung des Wirkungsgrades der Turbine ergibt sich mit der Erfindung somit ein weiterer besonderer Vorteil. Das elektromagnetische Axiallager ermöglicht die dynamische Anpassung an die im Betrieb der Turbine vom Läufer erzeugten Axialschübe. Werden vom Läufer nur geringe Axialkräfte auf die Welle übertragen, so hat auch das Axiallager nur eine entsprechend geringe Kompensationskraft den Axialkräften entgegenzusetzen. Sind die auf die Welle einwirkenden Axialkräfte hingegen erhöht, so kann durch eine entsprechende Stromzufuhr zu den Elektromagneten ein verstärktes Magnetfeld im Lager erzeugt werden, wodurch eine Verstärkung der im Lager wirkenden Lagerkräfte erzielt wird, die den erhöhten Axialkräften entgegenwirken. Mithin kann die vom Axiallager zu erbringende Axialkraftkompensation an den jeweiligen Betriebszustand der Turbine, d.h. an die jeweils herrschenden Druckverhältnisse und der daraus resultierenden Axialkräfte angepasst werden. Eine beständige und stets gleichen Eigenschaften genügende Lagerung der Welle kann somit in vorteilhafterweise Rechnung getragen werden. Dies gilt insbesondere im Hinblick auf eine stufenlose Drehzahlanpassung.

Insgesamt wird mit der Erfindung somit eine Lagerung vorgeschlagen, die die Aufnahme höherer Kräfte erlaubt und somit die Reduzierung der Wirkfläche des Ausgleichskolbens ermöglicht, um mit direkt einhergehend die Erhöhung des Wirkungsgrades der Turbine verbunden ist. Zudem ist das erfindungsgemäß vorgesehene Axiallager berührungsfrei, schmiermittelfrei, verschleißfrei und somit wartungsfrei. Es zeichnet sich zudem durch eine große Laufruhe sowie ein niedriges Betriebsgeräusch aus. Ferner ist die Anpassung von Lagereigenschaften an die im Betrieb der Turbine wirkenden Betriebseigenschaften auch während eines Betriebs der Turbine aktiv möglich.

Gemäß einem weiteren Merkmal der Erfindung ist vorgesehen, dass das Axiallager eine rotierende Lagerscheibe aufweist, die unter Belassung eines Spaltraumes berührungsfrei zwischen zwei feststehenden Elektromagneten angeordnet ist. Die Tragfähigkeit des Axiallagers, d.h. die zur Kompensation der Axialkräfte aufzubringenden Gegenkraft hängt zu einem von der Anzahl der Wicklungen der Elektromagneten, der Höhe des durch die Wicklungen fließenden Stromes sowie der Spaltbreite zwischen den feststehenden Elektromagneten und der Lagerscheibe ab. Je mehr Wicklungen und je höher der Strom, desto stärker ist bei gleichbleibendem Spaltraum das Magnetfeld und damit die mögliche Gegenkraft. In Abhängigkeit der vorbeschriebenen Zusammenhänge und der bei einem Betrieb der Turbine überhaupt zu erwartenden Axialkräfte kann auf die Anordnung eines Ausgleichskolbens unter Umständen ganz verzichtet werden, was den Wirkungsgrad der Turbine nochmals erhöht. In einem solchen Fall wären dann sämtliche in einer Turbine auftretenden Axialkräfte ausnahmslos durch das Axiallager zu kompensieren.

Zur Umsetzung einer konstruktiv einfachen Bauweise wird mit der Erfindung ferner vorgeschlagen, die rotierende Lagerscheibe am Ausgleichskolben anzuordnen. Diese öffnet die Möglichkeit, die Elektromagneten in konstruktiv einfacher Bauweise ringförmig auszubilden und an der Innenseite des Turbinengehäuses gegenüber der Welle feststehend anzuordnen.

Gemäß einem weiteren Vorschlag der Erfindung sind für eine Wellenlagerung zwei elektromagnetische Axiallager vorgesehen, wobei die Welle endseitig mit jeweils einem Lager versehen ist. Die Anordnung zweier Axiallager eröffnet die Möglichkeit, die insgesamt zu erzeugende Kompensationskraft auf zwei Lager zu verteilen, wobei bei einer gleichartigen Ausbildung der beiden Lager jedes der beiden Lager die Hälfte der Kompensationskraft zu erbringen hat. Hierdurch kann eine Baugrößenreduzierung der Axiallager erreicht werden. Bei gleichbleibender Baugröße der Axiallager ist es indessen möglich, die insgesamt wirkende Kompensationskraft zu vergrößern. Hierdurch bedingt kann der Durchmesser des Ausgleichskolbens weiter verringert werden, was zu einer nochmaligen Verbesserung des Wirkungsgrades führt.

Die mit der Erfindung vorgeschlagene Turbine ist weiterhin durch eine Regelungseinrichtung gekennzeichnet, die eine Meßeinrichtung und eine Vergleichsschaltung aufweist, wobei die Meßeinrichtung ein der Ist-Position der Welle entsprechendes Signal abgibt, die Vergleichsschaltung dieses Signal mit einer vorgebbaren Soll-Position der Welle vergleicht und bei Auftreten eines Unterschiedes zwischen Ist- und Soll-Position die Stromzufuhr entsprechend erhöht oder absenkt. Hierdurch wird sichergestellt, dass die Welle der Turbine in stets gleicher Position gehalten wird. Gleichbleibende Laufeigenschaften sind in vorteilhafterweise die Folge.

Gemäß einem weiteren Vorteil der Erfindung ist vorgesehen, dass die Meßeinrichtung zur Erfassung der Ist-Position der Welle einen Wegsensor aufweist. Die Regelgröße ist mithin die berührungslos über den Wegsensor gemessene Position der Turbinenwelle. Sobald sich diese verändert gibt der Wegsensor ein entsprechendes Signal an die Vergleichsschaltung der Regelungseinrichtung weiter. Alternativ zum Wegsensor kann die Meßeinrichtung zur Erfassung der Ist-Position der Welle auch über einen Drehzahlsensor verfügen. Die Drehzahl der Welle ist direkt abhängig von den an der Beschaufelung wirkenden Druckunterschieden. Ein Druckunterschied bewirkt nicht nur eine Veränderung der vom Läufer auf die Welle übertragenden Axialkraft, sondern auch eine Drehzahlveränderung des Läufers. Somit kann anstelle einer durch eine unterschiedliche Axialkrafteinwirkung bedingte Positionsverschiebung der Welle auch die Drehzahlveränderung der Welle erfasst werden, wobei durch eine entsprechende Umrechnung die Drehzahländerung der Welle Rückschlüsse auf eine axiale Positionsverschiebung der Welle zulässt.

Weitere Vorteile und Merkmale der Erfindung ergeben sich aus der Beschreibung anhand der nachfolgenden Zeichnung. Dabei zeigen:
- Fig. 1: in schematischer Darstellung eine Überdruckturbine und
- Fig. 2: einen beispielhaft dargestellten Regelplan.

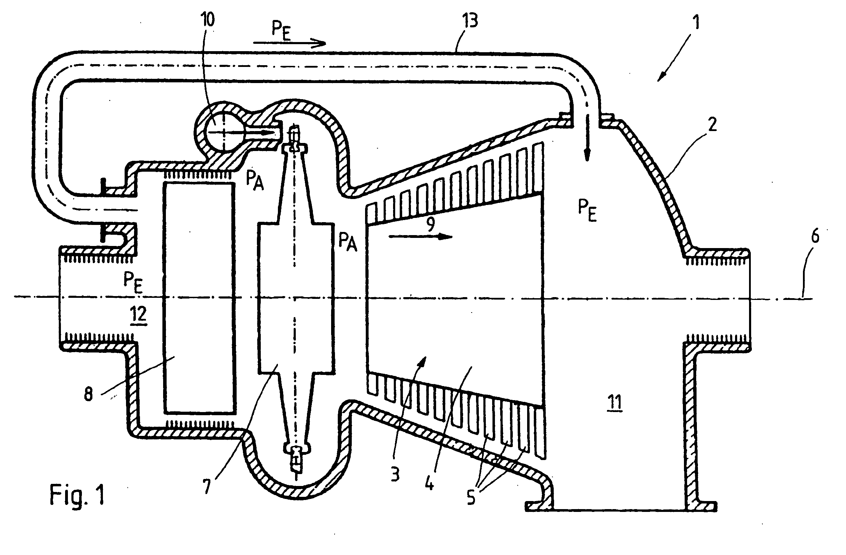

Figur 1 zeigt in schematischer Darstellung eine Überdruckturbine 1. In einem Gehäuse 2 sind ein aus einer Trommel 4 und mehreren Schaufeln 5 stehender Läufer 3 sowie ein Ausgleichskolben 8 angeordnet. Der Läufer 3 und der Ausgleichskolben 8 werden von einer gemeinsamen Welle 6 getragen. Weiterhin trägt die Welle 6 ein zwischen dem Ausgleichskolben 8 und dem Läufer 3 angeordnetes Curtis-Rad 7.

Der Einlass des unter hohem Druck P_{A} stehenden Heißdampfes in das Turbinengehäuse 2 erfolgt über den Dampfeinlass 10. Von hier aus strömt der Dampf sowohl in Dampfströmungsrichtung, d.h. bezogen auf die Bildebene nach rechts in Richtung auf den Läufer 3, sowie entgegen der Dampfströmungsrichtung, d.h. bezogen auf die Bildebene nach links in Richtung auf den Ausgleichskolben 8. Der in Strömungsrichtung hinter dem Läufer 3 vorgesehene Abdampfstutzen 11 ist über eine Rohrleitung 13 mit dem entgegen der Strömungsrichtung hinter dem Ausgleichskolben 8 gelegenen Raum 12 strömungstechnisch verbunden. Im Abdampfstutzen 11, im Raum 12 sowie in der Rohrleitung 13 herrscht der gegenüber dem Anfangsdruck P_{A} verringerte Enddruck P_{G}.

Bei einem Betrieb der Turbine 1 findet zwischen den einzelnen Schaufeln 5 des Läufers 3 eine Expansion des Dampfes statt. Infolgedessen ist bezogen auf die Strömungsrichtung der Druck vor einer jeden Schaufel höher als dahinter. Der niedrigste Druck, d. h. der Enddruck p_{E} stellt sich hinter der letzten Schaufel 5 ein. Infolge dieser Druckunterschiede ergibt sich am Läufer 3 ein Axialschub des Läufers 9 in Richtung der Dampfströmung. Dieser Axialschub wird in Form einer entsprechend wirkenden Axialkraft auf die Welle 6 übertragen.

Das Curtis-Rad 7 ist ein Gleichdruckrad, so dass der Druck P_{A} im Zwischenraum zwischen Ausgleichskolben 8 und Läufer 3 gleichermaßen ansteht und mithin sowohl auf den Ausgleichskolben 8 als auch den Läufer 3 einwirkt. In Strömungsrichtung hinter dem Läufer 3 wirkt der Enddruck p_{E} ebenso wie auf der Rückseite des Ausgleichskolbens 8. Durch die vorgeschriebene Druckverteilung am Ausgleichskolben 8 wirkt ein entgegen der Strömungsrichtung wirkender Schub am Ausgleichskolben 8 der gleichfalls auf die Welle 6 übertragen wird und entgegen der durch den Läufer 3 auf die Welle 6 übertragenen Axialkraft gerichtet ist. Hierdurch wird zumindest eine Teilkompensation der durch den Läufer 3 bedingten Axialkräfte bewirkt.

Von Nachteil bei dieser Anordnung ist, dass die vom Ausgleichskolben 8 bewirkte Kompensation von der Größe der Wirkfläche des Ausgleichskolbens 8, d.h. von dessen Durchmesser abhängig ist. Hierbei gilt, je größer die Wirkfläche des Ausgleichskolbens 8, desto größer die dadurch bewirkte Kompensation. Je größer allerdings die Wirkfläche des Ausgleichskolbens 8, desto größer auch der am Ausgleichskolben 8 abfallende Leckdampfstrom, der keine Arbeit am Läufer 3 verrichten kann, und desto kleiner der Wirkungsgrad der Turbine.

Die in Figur 1 dargestellte Turbine zeigt einen Ausgleichskolben 8 mit einem gegenüber herkömmlichen Turbinen verringerten Durchmesser. Erfindungsgemäß wird dies hierdurch erreicht, dass die Welle 6 mittels zumindest einem elektromagnetischen Axiallager gelagert ist. Hierdurch wird eine erhöhte Kraftkompensation durch das Axiallager erreicht, was in vorteilhafterweise die Möglichkeit eröffnet, die Wirkfläche des Ausgleichskolbens 8 zu verringern, wodurch bei einer gleichzeitig wirkungsvollen Kompensation der durch den Läufer bewirkten Axialkräfte eine gegenüber herkömmlichen Turbinen verbesserter Wirkungsgrad erzielt wird. Mit dem elektromagnetischen Axiallager ist es somit möglich, die am Läufer 3 wirkenden Schubkräfte elektromagnetisch zu eliminieren, wobei das Magnetfeld im Axiallager durch eine entsprechende Stromzufuhr einstellbar und an die zu kompensierenden Axialkräfte variabel anpassbar ist.

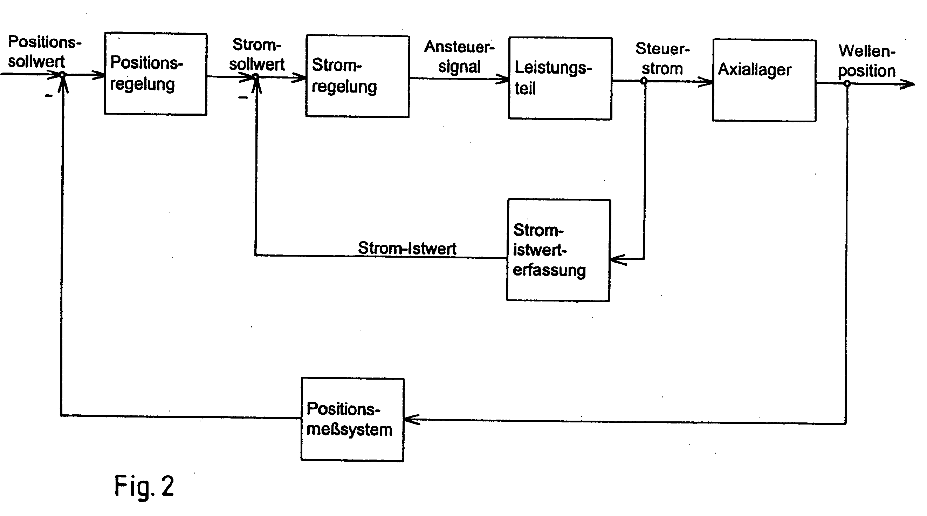

Den Aufbau einer beispielhaften Regeleinrichtung zur Festlegung des Magnetfelds im Axiallager zeigt Figur 2. Danach ist eine Regelungseinrichtung vorgesehen, die eine Meßeinrichtung zur Erfassung der Wellenposition beinhaltet. Dies kann beispielsweise durch einen Wegsensor oder einen Drehzahlsensor erfolgen. Die Ist-Position der Welle wird mit der vorgebbaren Soll-Position der Welle verglichen. Stellt sich hierbei ein Unterschied ein, so wird je nach festgestellter Positionsverschiebung der Welle die Stromzufuhr für die Elektromagneten des Axiallagers vergrößert oder verkleinert. Für den Fall, dass die Stromzufuhr erhöht wird vergrößert sich das Magnetfeld und damit die Lagerkraft im Axiallager. Anders herum, wird die Stromzufuhr verringert, so reduziert sich das Magnetfeld und die Lagerkraft wird entsprechend verkleinert. Gemäß dem Blockdiagramm nach Figur 2 findet somit im Anschluss an die Positionsregelung ein Vergleich zwischen Strom-Sollwert und Strom-Istwert statt, wobei am Ende der Stromregelung ein entsprechender Steuerstrom an das Axiallager gegeben wird, womit sich die gewünschte Wellenposition einstellt.

## Patentansprüche

1. Turbine, insbesondere Dampfturbine mit Reaktionsbeschaufelung, mit einem Trommel (4) und Beschaufelung (5) aufweisenden Läufer (3), einem Druckausgleichskolben (8) und einer den Läufer (3) und den Druckausgleichskolben (8) tragenden Welle (6) sowie wenigstens einem axial wirkende Wellenkräfte aufnehmenden Drucklager, **dadurch gekennchnet,** dass das Drucklager ein elektromagnetisches Axiallager ist.

2. Turbine nach Anspruch 1, **dadurch gekennzeichnet, dass** das Axiallager eine rotierende Lagerscheibe aufweist, die unter Belassung eines Spaltraumes berührungsfrei zwischen zwei feststehenden Elektromagneten angeordnet ist.

3. Turbine nach Anspruch 2, **dadurch gekennzeichnet, dass** die rotierende Lagerscheibe am Ausgleichskolben (8) angeordnet ist.

4. Turbine nach Anspruch 1 oder Anspruch 2, **dadurch gekennzeichnet, dass** für eine Wellenlagerung zwei elektromagnetische Axiallager vorgesehen sind, wobei die Welle (6) endseitig mit jeweils einem Lager versehen ist.

5. Turbine nach einem der Ansprüche 1 bis 4, **gekennzeichnet durch** eine Regelungseinrichtung, die eine Meßeinrichtung und eine Vergleichseinrichtung aufweist, wobei die Meßeinrichtung ein der Ist-Position der Welle entsprechendes Signal abgibt, die Vergleichsschaltung dieses Signal mit einer vorgebbaren Soll-Position der Welle vergleicht und bei Auftreten eines Unterschiedes zwischen Istund Soll-Position die Stromzufuhr entsprechend erhöht oder absenkt.

6. Turbine nach Anspruch 5, **dadurch gekennzeichnet, dass** die Meßeinrichtung zur Erfassung der Ist-Position der Welle einen Wegsensor aufweist.

7. Turbine nach Anspruch 5, **dadurch gekennzeichnet, dass** die Meßeinrichtung zur Erfassung der Ist-Position der Welle einen Drehzahlsensor aufweist.
